Europäisches Patentamt

European Patent Office

Office européen des brevets

(19)

(11) Publication number: **0 035 386**
**B1**

(12) **EUROPEAN PATENT SPECIFICATION**

(45) Date of publication of patent specification: 07.08.85    (51) Int. Cl.⁴: **B 23 K 9/02**

(21) Application number: **81300828.1**

(22) Date of filing: **27.02.81**

(54) Narrow groove welding torch.

(30) Priority: **29.02.80 US 126093**

(43) Date of publication of application:
**09.09.81 Bulletin 81/36**

(45) Publication of the grant of the patent:
**07.08.85 Bulletin 85/32**

(84) Designated Contracting States:
**DE FR GB**

(56) References cited:
**GB-A-1 034 762**
**US-A-2 868 950**
**US-A-3 261 962**
**US-A-4 188 526**

(73) Proprietor: **WESTINGHOUSE ELECTRIC CORPORATION**
**Westinghouse Building Gateway Center**
**Pittsburgh Pennsylvania 15222 (US)**

(72) Inventor: **Stol, Israel**
**209 East Patty Lane**
**Monroeville Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates to welding torches and more particularly to an internally insulated welding torch for making narrow groove welds.

Narrow groove welding is particularly applicable to welding large heavy sections where the amount of weld metal and number of passes is appreciable. In such welding operations tough, rugged, dependable torches which will fit into the deep narrow weld grooves are a necessity, if high quality welds are to be achieved.

US—A—2,868,950 discloses an electric metal-arc process and apparatus for the high current, high speed welding of relatively thick metal stock which comprises a consumable electrode torch feeding or annular stream of gas about the electrode. This torch is water cooled.

US—A—3,261,962 shows a torch with a longitudinal passage having coherent stream gas flow.

GB—A—1,034,762 shows the use of gas lenses having improved means for mounting gas lenses and having a gas-permeable subassembly.

US—A—4,188,526 shows a narrow weld-groove welding process where bare welding wire is fed into a weld groove and subjected to plastic deformation of a waveform.

It is the principal object of the invention to provide a strong and durable welding torch having a stable configuration for welding in deep grooves.

The invention resides broadly in a welding torch for welding narrow grooves having a housing containing an electrode holder and said housing and said electrode holder having cooling ducts for cooling the torch, insulating strips disposed between said housing and said electrode holder, said housing having at least one gas duct connected to an opening at one end for discharging a shielding gas during welding, characterized in that said housing and said electrode holder have rectangular cross sections, a diffuser is disposed at the end of said at least one gas duct adjacent said opening and said electrode holder is supported over substantially its entire length in the housing by means of the insulating strips.

The invention will become more readily apparent from the following description of an exemplary embodiment when taken in connection with the accompanying drawings, in which:—

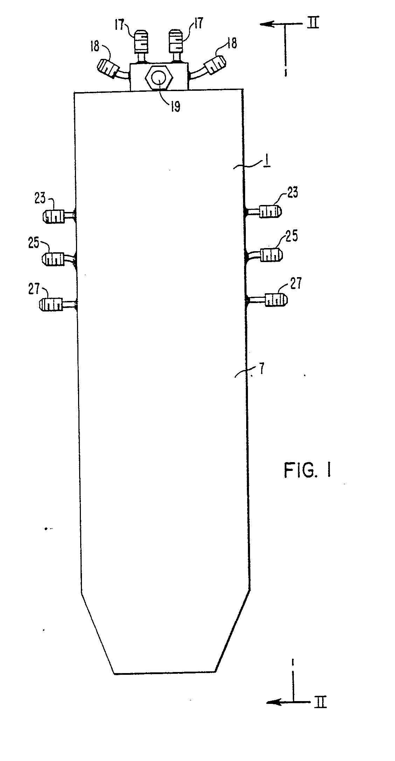

Figure 1 is a front elevational view of a welding torch made in accordance with this invention;

Figure 2 is a side elevational view of the torch; and

Figure 3 is a sectional view taken on line III—III of Figure 2.

Referring now to the drawings in detail there is shown a welding torch 1 for producing narrow groove welds. The torch 1 comprises an elongated electrode holder 3 having a generally rectangular cross section and water or cooling ducts 5 disposed therein; an elongated metal housing or sheathing 7 of generally rectangular cross section having water or cooling ducts 9 and shielding gas ducts 11 generally extending the length thereof; and elongated insulating strips 13 or insulating ribbons of generally rectangular cross section disposed between the electrode holder 3 and the housing 7.

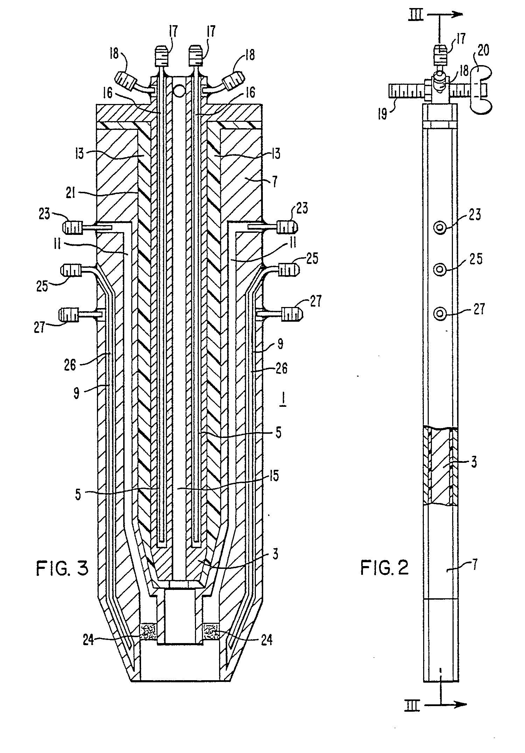

As shown in Figure 3 the electrode holder 3 is preferably made of a good conductive material such as copper and has a centrally disposed bore 15, which may be adapted for consumable or non-consumable electrodes. Cooling ducts 5 are disposed in the electrode holder 3 adjacent the leading and trailing sides thereof. A bayonet tube 16 which extends from an inlet nozzle 17 is disposed within the cooling duct 5 and an outlet nozzle 18 enables circulation of coolant through the cooling duct. A threaded stud 19, to which an electrical lead (not shown) is attached is disposed on the upper end of the electrode holder 3 generally perpendicular to the longitudinal axis of the electrode holder 3. A wing nut 20 is utilized to secure a non-consumable electrode to the electrode holder 3.

The insulating strips 13 are made of an electrically insulating resilient material having a high dielectric strength such as Teflon and are disposed on two sides of the torch, the leading and trailing sides. The insulating ribbons also made of Teflon are also utilized to electrically insulate or isolate the housing 7 from the electrode holder 3. While the preferred embodiment shows ribbons made of Teflon, it is understood that contiguous the surfaces of either the electrode holder 3, or the housing 7, or both may be coated with an insulating material provided the coating has sufficient resilience and dielectric strength to prevent the formation of an arc if the torch housing 7 should accidently come into contact with the electrically hot workpiece.

The housing 7 has a central opening 21 shaped to receive the insulating strips 13 the insulating ribbons 20 and the electrode holder 3. The shielding gas ducts 11 are disposed on the leading and trailing sides of the central opening, have an inlet nozzle 23 on each side of the housing 7 and discharge into the central opening adjacent the lower end through a diffuser 24, which is disposed in the lower end of each shielding gas duct 11. The cooling ducts 9 are disposed adjacent the leading and trailing sides of the housing 7 and generally extend the length thereof. The cooling ducts 9 each have an inlet nozzle 25 and a bayonet tube 26 extending from the inlet nozzle 25 to the lower end of the duct 9 to conduct the cooling fluid to the lower end of the duct. The ducts 9 also have outlet nozzles 27 disposed adjacent the upper ends of the ducts 9 on both the leading and trailing sides of the housing. The housing 7 completely surrounds the electrode holder 3 with a steel sheath that is rigged and electrically insulated from the electrode holder so that no arcing will occur even if the housing 7 contacts the walls of the narrow groove in the workpiece being welded.

The narrow groove welding torch hereinbefore described advantageously provides an external metallic sheath, which is mechanically durable, and which is electrically insulated from the electrode holder. The sheath can absorb shock and prevent damage to the insulation and provides water cooling on both sides of the insulation so that a resilient insulating material can be utilized.

## Claims

1. A welding torch for welding narrow grooves having a housing (7) containing an electrode holder (3) and said housing (7) and said electrode holder (3) having cooling ducts (5, 9) for cooling the torch, insulating strips (13) disposed between said housing and said electrode holder, said housing having at least one gas duct connected to an opening at one end for discharging a shielding gas during welding, characterized in that said housing (7) and said electrode holder (3) have rectangular cross sections, a diffuser (24) is disposed at the end of said at least one gas duct adjacent said opening and said electrode holder (3) is supported over substantially its entire length in the housing (7) by means of the insulating strips (13).

2. A welding torch according to claim 1 characterized in that said at least one of said gas ducts comprise one gas duct at the leading side of said electrode holder and one gas duct at the trailing side of said electrode holder.

3. A welding torch according to claim 1, characterized in that the cooling ducts in the electrode holder are adjacent the leading and trailing sides thereof.

4. Groove welding torch according to claim 1, 2 or 3 characterized in that the cooling ducts in the housing are disposed adjacent the trailing and leading sides thereof.

5. A welding torch according to any of claims 1 or 4 characterized in that the insulating strips are disposed between the leading side of the electrode holder and the leading side of the housing and disposed between the trailing side of the electrode holder and the trailing side of the housing.

6. A welding torch according to any of the preceding claims characterized in that the cooling ducts in the electrode holder are disposed adjacent the insulating strips and the cooling ducts in the housing are also disposed adjacent the insulating strip and wherein the insulating strip is a resilient material having a high dielectric strength.

## Patentansprüche

1. Ein Schweissbrenner zum Schweissen schmaler Nuten, bestehend aus einem Gehäuse (7) mit darin angeordneter Elektrodenhalterung (3) und Kühldurchlässen (5, 9) im Gehäuse (7) und in der Elektrodenhalterung (3) zum Kühlen des Brenners, wobei zwischen dem Gehäuse und der Elektrodenhalterung Isolierstreifen (13) angeordnet sind und im Gehäuse mindestens ein Gasdurchlass vorgesehen ist, der in eine Öffnung an einem Ende des Gehäuses mündet, um während des Schweissens eine Abschirmgas auszustossen, dadurch gekennzeichnet, dass das Gehäuse (7) und die Elektrodenhalterung (3) einen rechteckigen Querschnitt aufweisen, am Ende des mindestens einen Gasdurchlasses angrenzend an die Öffnung ein Zerstäuber (24) angeordnet ist, und dass die Elektrodenhalterung (3) über ihre im wesentlichen gesamte (7) Länge im Gehäuse (7) durch Isolierstreifen (13) gestützt ist.

2. Schweissbrenner nach Anspruch 1, dadurch gekennzeichnet, dass mindestens einer der Gasdurchlässe einen Kanal an der vorderen oder Leitseite der Elektrodenhalterung und einen Kanal an der rückwärtigen Seite der Elektrodenhalterung aufweist.

3. Schweissbrenner nach Anspruch 1, dadurch gekennzeichnet, dass die Kühldurchlässe in der Elektrodenhalterung jeweils angrenzend an die vordere und rückwärtige Seite dieser Halterung angeordnet sind.

4. Nuten-Schweissbrenner nach Anspruch 1, 2 oder 3, dadurch gekennzeichnet, dass die Kühldurchlässe im Gehäuse jeweils angrenzend an dessen Vorder- und Rückseite angeordnet sind.

5. Schweissbrenner nach einem der Ansprüche 1 oder 4, dadurch gekennzeichnet, dass die Isolierstreifen zwischen der Vorderseite der Elektrodenhalterung und der Vorderseite des Gehäuse und zwischen der Rückseite der Elektrodenhalterung und der Rückseite des Gehäuses angeordnet sind.

6. Schweissbrenner nach jeder der vorhergehenden Ansprüche, dadurch gekennzeichnet, dass die Küldurchlässe in der Elektrodenhalterung neben den Isolierstreifen angeordnet sind und die Kühldurchlässe im Gehäuse sind auch neben der Isolierstreife angeordnet, und worin die Isolierstreife ein federndes Material ist, das eine hohe dielektrische Stärke hat.

## Revendications

1. Torche de soudage pour souder des saignées étroites, ayant un logement (7) contenant un porte-électrode (3), et le logement (7) et le porte-électrode (3) comportant des conduits de refroidissement (5, 9) pour refroidir la torche, des bandes isolantes (13) diposées entre le logement et le porte-électrode, le logement ayant au moins un premier conduit de gaz relié à une ouverture à une extrémité pour décharger un gaz inerte pendant le soudage, caractérisée en ce que le logement (7) et le porte-électrode (3) ont une section transversale rectangulaire, un diffuseur (24) est placé à l'extrémité dudit premier conduit de gaz près de l'ouverture et le porte-électrode (3) est soutenu sur presque toute sa longueur dans le logement (7) au moyen des bandes isolantes (13).

2. Torche de soudage selon la revendication 1, caractérisée en ce que ledit premier conduit est constitué d'un conduit de gaz sur le bord antérieur du porte-électrode et d'un conduit de gaz sur le bord postérieur du porte-électrode.

3. Torche de soudage selon la revendication 1, caractérisée en ce que les conduits de refroidissement dans le porte-électrode sont proches des bords antérieur et postérieur de celui-ci.

4. Torche de soudage pour saignées selon la revendication 1, 2 ou 3, caractérisée en ce que les conduits de refroidissement dans le logement sont proches des bords postérieur et antérieur de celui-ci.

5. Torche de soudage selon les revendications 1 ou 4, caractérisée en ce que les bandes isolantes sont disposées entre le bord antérieur du porte-électrode et le bord antérieur du logement et entre le bord postérieur du porte-électrode et le bord postérieur du logement.

6. Torche de soudage selon n'importe laquelle des revendications précédentes caractérisée en ce que les conduits de refroidissement dans le porte-électrode sont disposés de façon adjacente aux bandes isolantes et que les conduits de refroidissement dans le logement sont aussi disposés de façon adjacente à la bande isolante, la bande isolante étant une matière élastique présentant une rigidité diélectrique élevée.

FIG. I

FIG. 3

FIG. 2